# EUROPEAN PATENT APPLICATION

(11) **EP 4 471 105 A1**
(43) Date of publication of application: **04.12.2024**
(21) Application number: 23382511.6
(22) Date of filing: 30.05.2023
(51) Int. Cl.: C09K 11/02, C09K 11/88

(54) **A QUANTUM DOT POPULATION COMPRISING SILVER CHALCOGENIDE QUANTUM DOTS, A METHOD FOR OBTAINING THE QUANTUM DOT POPULATION AND AN OPTOELECTRONIC DEVICE COMPRISING THE QUANTUM DOT POPULATION**

(71) Applicant: Fundació Institut de Ciències Fotòniques, 08860 Castelldefels (ES); Institució Catalana De Recerca I Estudis Avançats (ICREA), 08010 Barcelona (ES)
(72) Inventor: KONSTANTATOS, Gerasimos, 08860 CASTELLDEFELS (ES); WANG, Yongjie, CASTELLDEFELS, 08860 (ES)
(74) Representative: Ponti & Partners, S.L.P

(57) **Abstract**

The present invention relates to a quantum dot population comprising silver chalcogenide quantum dots, wherein the silver chalcogenide quantum dots do not include phosphine.

The present invention also relates to a method for obtaining the quantum dot population of the invention, and to an optoelectronic device comprising the quantum dot population.

## Description

This development was partially supported by MCIN (Ministerio de Ciencia e Innovación) with funding from European Union NextGenerationEU(PRTR-C17.l1) and by Generalitat de Catalunya.

Results incorporated in this standard have received funding from the European Research Council (ERC) under the European Union's Horizon 2020 research and innovation programme (grant agreement No 101002306).

### FIELD OF THE INVENTION

The present invention generally relates, in a first aspect, to a quantum dot population comprising silver chalcogenide quantum dots absent of phosphine.

A second aspect of the present invention relates to a method for obtaining the quantum dot population of the first aspect of the present invention.

A third aspect of the present invention relates to an optoelectronic device comprising the quantum dot population of the first aspect of the present invention.

### BACKGROUND OF THE INVENTION

Near infrared (NIR) and Short-wavelength infrared (SWIR) light position in the center of optical communications, spectroscopy, biological imaging, surveillance, and environmental mapping [1-6]. However, commercial devices serving in the NIR and SWIR region are still largely based on costly epitaxy materials.

Recently, solution-processed quantum dots are emerged as promising yet low-cost substitutes for NIR/SWIR applications, thanks to their size tunability and surface functionality [4, 7, 8]. However, currently most of NIR/SWIR quantum dots are based on lead chalcogenides or mercury chalcogenides. The toxicity of lead and mercury severely limits the availability of those materials for consumer-oriented devices.

The desire for non-toxic, solution-processed materials in the NIR/SWIR region grows rapidly. Silver chalcogenides, especially silver telluride (Ag₂Te), possessing low bandgap and non-toxicity, are promising candidates for applications in NIR/SWIR region. However, the controllable synthesis of size-tuned silver telluride quantum dots are still implicit and under-developed [9-11].

Prior reports of tunable emissive Ag₂Te quantum dots have relied on the regulate-ability of phosphines. Zhang et al reported controllable synthesis of Ag₂Te quantum dots by regulating the reactivity of silver precursors via tertiary phosphines [12]. The exciton absorption peak of Ag₂Te quantum dots can only be tuned in the range of 900-1150nm.

Liu et al found that triakyl phosphine can induce the dissolution of small-size Ag₂Te quantum dots [13]. By controlling this dissolution effect, they can further regulate the monomer supply kinetics, leading to larger sizes. The emission of Ag₂Te quantum dots has been successfully tuned from 950nm to 2100nm with phosphine-induced ripening. Nevertheless, phosphine is highly toxic, pyrophoric, unstable and expensive.

So far, monodisperse Ag₂Te quantum dots with distinct exciton peak (peak-to-valley ratio > 1.2) has been rarely reported, especially with large dots (absorption peak >1400nm) [12-15].

It is, therefore, necessary to provide an alternative to the state of the art by providing a method for synthesizing silver telluride quantum dots with a phosphine free method, excellent size tunability and monodispersity.

### References:

[1] Ackerman, M. M., Tang, X. & Guyot-Sionnest, P. Fast and Sensitive Colloidal Quantum Dot Mid-Wave Infrared Photodetectors. ACS Nano 12, 7264-7271 (2018).
[2] Chen, D. et al. Passivating 100 Facets of PbS Colloidal Quantum Dots via Perovskite Bridges for Sensitive and Stable Infrared Photodiodes. Advanced Functional Materials n/a, 2210158.
[3] Christodoulou, S. et al. Single-Exciton Gain and Stimulated Emission Across the Infrared Telecom Band from Robust Heavily Doped PbS Colloidal Quantum Dots. Nano Lett. 20, 5909-5915 (2020).
[4] Keuleyan, S., Lhuillier, E., Brajuskovic, V. & Guyot-Sionnest, P. Mid-infrared HgTe colloidal quantum dot photodetectors. Nature Photon 5, 489-493 (2011).
[5] Gao, L. et al. Efficient near-infrared light-emitting diodes based on quantum dots in layered perovskite. Nat. Photonics 14, 227-233 (2020).
[6] Liu, J. et al. A near-infrared colloidal quantum dot imager with monolithically integrated readout circuitry. Nat Electron 1-9 (2022) doi:10.1038/s41928-022-00779-x.
[7] Saran, R. & Curry, R. J. Lead sulphide nanocrystal photodetector technologies. Nature Photon 10, 81-92 (2016).
[8] Vafaie, M. et al. Colloidal quantum dot photodetectors with 10-ns response time and 80% quantum efficiency at 1,550 nm. Matter 4, 1042-1053 (2021).
[9] Wei, T.-R., Qiu, P., Zhao, K., Shi, X. & Chen, L. Ag2Q-based (Q = S, Se, Te) Silver Chalcogenide Thermoelectric Materials. Advanced Materials n/a, 2110236.
[10] Chen, C., He, X., Gao, L. & Ma, N. Cation Exchange-Based Facile Aqueous Synthesis of Small, Stable, and Nontoxic Near-Infrared Ag 2 Te/ZnS Core/Shell Quantum Dots Emitting in the Second Biological Window. ACS Appl. Mater. Interfaces 5, 1149-1155 (2013).
[11] Zhang, Y. et al. Controlled Synthesis of Ag2Te@Ag2S Core-Shell Quantum Dots with Enhanced and Tunable Fluorescence in the Second Near-Infrared Window. Small 16, 2001003 (2020).
[12] Zhang, M.-Y. et al. Regulation of Silver Precursor Reactivity via Tertiary Phosphine to Synthesize Near-Infrared Ag 2 Te with Photoluminescence Quantum Yield of up to 14.7%. Chem. Mater. acs.chemmater.1c02610 (2021) doi:10.1021/acs.chemmater.1c02610.
[13] Liu, Z.-Y. et al. Breaking through the Size Control Dilemma of Silver Chalcogenide Quantum Dots via Trialkylphosphine-Induced Ripening: Leading to Ag 2 Te Emitting from 950 to 2100 nm. J. Am. Chem. Soc. jacs.1c06661 (2021) doi:10.1021/jacs.1c06661.
[14] Yang, H. et al. Au-Doped Ag2Te Quantum Dots with Bright NIR-Ilb Fluorescence for In Situ Monitoring of Angiogenesis and Arteriogenesis in a Hindlimb Ischemic Model. Advanced Materials n/a, 2103953.
[15] Lee, W.-Y. et al. Room-Temperature High-Detectivity Flexible Near-Infrared Photodetectors with Chalcogenide Silver Telluride Nanoparticles. ACS Omega 7, 10262-10267 (2022).

### SUMMARY OF THE INVENTION

To that end, the present invention relates, in a first aspect, to a quantum dot population comprising silver chalcogenide quantum dots, wherein, in contrast to the prior art quantum dot populations, the silver chalcogenide quantum dots do not include phosphine.

For an embodiment, the silver chalcogenide quantum dots are synthesized silver chalcogenide quantum dots, while for other embodiments the silver chalcogenide quantum dots are silver chalcogenide quantum dots obtained by means of non-synthesis processes (decomposition, single or double replacement, etc.) or are byproducts or sub-products of a chemical reaction.

Depending on the embodiment, the chalcogenide ion of the silver chalcogenide of the silver chalcogenide quantum dots is selected from sulphide, selenide, telluride, or combinations thereof.

In other words, the silver chalcogenide is represented by AgᵢXⱼ in which X can be S, Se, Te, or combinations thereof, and wherein i is generally 2 (1 < i < 3) and j is 1.

According to an embodiment, the silver chalcogenide quantum dots are passivated by amines and thiols.

For an implementation of that embodiment, the silver chalcogenide quantum dots are passivated by oleylamine and 1-octanethiol, or 1-dodecanethiol, or 1-hexadecanethiol, or 1-octadecanethiol, or their combinations thereof.

For an embodiment, the silver chalcogenide quantum dots of the quantum dot population of the first aspect of the present invention have distinct excitonic absorption peak, having a peak-valley ratio > 1.2, tuned from 1000nm to 2000nm, preferably above 1400nm.

For some embodiments, the silver chalcogenide quantum dots of the quantum dot population of the first aspect of the present invention are shelled with a shell made of a phosphine-free material.

For some embodiments, the quantum dot population of the first aspect of the present invention forms a structure, such as sheet, a film, or a layer, or an ink.

In a second aspect, the present invention relates to a method for obtaining the quantum dot population of the first aspect, wherein the method comprises obtaining the silver chalcogenide quantum dots without using phosphine.

For an embodiment of the method of the second aspect of the present invention, the method comprises:
- preparing silver precursor from amines and at least one of silver halide and silver pseudo-halide;
- preparing chalcogenide precursor from chalcogen oxide (such as SeO₂, TeO₂, or combinations thereof) and thiols (such as 1-dodecanethiol, 1-hexadecanethiol, 1-octadecanethiol, etc); and
- synthesizing the silver chalcogenide quantum dots by injecting both the silver precursor and the chalcogenide precursor into a solution, such as according to a hot-injection method (understood as a method embracing both injecting precursors with lower temperature than the solvent temperature, and also injecting precursors with higher temperature than the solvent temperature).

For some embodiments, the silver chalcogenide quantum dots are capped with organic ligands during the above mentioned synthesis step. Those organic ligands have a long carbon chain, generally with more than four carbons, typically more than eight carbons.

For an embodiment, an amount > 0.1 mL of silver precursor and/or an amount >0.1mL of chalcogenide precursor are injected into said solution.

According to an embodiment, the method of the second aspect of the present invention comprises providing the above mentioned solution by loading pre-dried hydrocarbon solvents under inert atmosphere (such as that formed by N₂, Ar, or combinations thereof) heating at a temperature between 20°C and the boiling point of said pre-dried hydrocarbon solvents.

For an embodiment, the method further comprises adding extra silver precursor as post-synthesis treatment, or stabilizing process, to stabilize the silver chalcogenide quantum dots in solvents without ripening.

For an implementation of that embodiment, the stabilizing process comprises:
- consuming excess thiols by adding the above mentioned extra silver precursor;
- partially substituting thiol ligands with amines on silver chalcogenide quantum dots; and
- providing a stable silver chalcogenide quantum dots with tuneable size and monodispersity.

According to an embodiment, said step of adding extra silver precursor as post-synthesis treatment comprises at least one cycle of adding a desired amount of extra silver precursor after reaction crude solution cooling down and purification.

For an implementation of said embodiment, the desired amount of extra silver precursor is > 0.1 mL and/or the purification is made with an anti-solvent which is at least one of methanol, acetone, isopropanol, ethanol, acetonitrile, or mixture thereof.

According to an embodiment, alternative to the one described above related to an injection method, the method of the second aspect of the present invention comprises:
- preparing silver precursor from amines and at least one of silver halide and silver pseudo-halide;
- preparing chalcogenide precursor from chalcogen oxide and thiols; and
- loading said silver and chalcogenide precursors in a hydrocarbon solvent followed by a heat-up process from room temperature to the boiling point of said hydrocarbon solvent.

According to an embodiment, the halide ion of the silver halide, for any of the above described embodiments, is selected from chloride, bromide, iodide, and combinations thereof.

For an embodiment, for any of the above described embodiments, the hydrocarbon solvent is a mixture of oleylamine and 1-octadecene. However it is not limited to this combination, it can comprise also of alkyl-amines (e.g. octylamine, dodecylamine etc.) and other high boiling point hydrocarbon solvents (e.g. decadecene, dodecadecene, hexadecadecene etc.)

For an embodiment, the thiols, for any of the above described embodiments, are at least one of alkyl thiols and their mixture, and/or the above mentioned amines are at least one of the primary amines and their mixture.

According to an embodiment of the method of the second aspect of the present invention comprises:
- the step of preparing silver precursor from silver halide comprises pre-drying amines under vacuum and dissolving silver halide in pre-dried amines with various concentrations (such as from 0.01 to 3 mol/L) at mild temperature, between 20°C and 100°C, in inert atmosphere (such as that formed by N₂, Ar, or combinations thereof); and/or
- the step of preparing chalcogenide precursor comprises mixing chalcogen oxide with thiols in inert atmosphere under mild temperature heating, between room temperature and 150°C, and continuous inert gas bubbling.

For an embodiment of the method of the second aspect of the present invention, the silver chalcogenide quantum dots are organic ligands capped silver chalcogenide quantum dots, and the method further comprises performing a ligand-exchange on surface of the silver chalcogenide quantum dots, for providing the same with ligands with a shorter chain (such as, 1,2-ethanedithiol, ethanethiol, 1,3-propanedithiol, propanethiol, etc) than said organic ligands (which have a long chain, defined as generally with more than four carbons, typically more than eight carbons). Surface ligand-exchange is to improve the conductivity, for example of a nanocrystal film comprising those silver chalcogenide quantum dots for optoelectronic devices.

For an embodiment, 1,2-ethanedithiol (EDT) is used to ligand-exchange oleylamine/dodecanethiol on the surface of the silver chalcogenide quantum dots.

For an alternative embodiment, the method of the second aspect of the present invention further comprises preparing an ink with the obtained silver chalcogenide quantum dots, by performing the following steps:
- preparing a silver chalcogenide quantum dot solution by dissolving organic ligands capped silver chalcogenide quantum dots into a first solvent; said organic ligands have a long chain, defined as generally with more than four carbons, typically more than eight carbons;
- preparing a ligand solution by dissolving desired ligands (such as, 3-mercapto propionic acid, 2-mercaptoethanol, metal halide complexes, etc.) into a second solvent, wherein said second solvent is not miscible with said first solvent, and wherein said desired ligands have a shorter chain than said organic ligands, generally with less than six carbons, typically less than three carbons;
- doing phase transfer ligand exchange by mixing said silver chalcogenide quantum dot solution with said ligand solution, wherein two phases are obtained: a first phase containing said first solvent and exchanged organic ligands (which are previously capped on quantum dots during synthesis, such as oleylamine, 1-dodecanethiol, etc.), and a second phase containing said second solvent with ligand-exchanged quantum dots;
- precipitating said ligand-exchanged quantum dots by adding a third solvent into the second phase; and
- preparing quantum dot inks by dissolving said ligand-exchanged silver chalcogenide quantum dots into a fourth solvent.

Other desired properties provided by the desired ligands are like forming strong binding with the surface ions, for example, thiols and halide form bonds with silver ion, other cations (Cd, Hg, Pb, Bi, ..) can form bonds with Te, etc.

Generally, the first and third solvents are apolar solvents and the second and fourth solvents are polar solvents.

For some embodiments, the second and fourth solvents are at least one of or mixture of hydrocarbon solvents or their derivatives with functional groups containing elements of halogen, oxygen, nitrogen, sulfur, phosphorus, or boron.

For an embodiment the first solvent is octane, the second solvent is N, N-dimethylformamide (DMF), the third solvent is toluene, and the fourth solvent is neat DMF.

For some embodiment, the desired ligands are or comprise at least one of thiols, amines, halides, metal chalcogenide complex or their mixture.

Thanks to the above mentioned ligand-exchange, the silver chalcogenide quantum dot are easily dissolved and well-dispersed, and thus the ink can be prepared.

The so prepared ink can be applied by spin-coating or printing onto a substrate or lower sheet or layer, for manufacturing a device, such as an optoelectronic device, according to a manufacturing method of a further aspect of the present invention.

For some embodiments, the method of the second aspect of the present invention further comprises shelling the silver chalcogenide quantum dots with a shell made of a phosphine-free material. This material may comprise a metal-chalcogenide compound (such as a silver chalcogenide compound, ZnS, ZnSe, ZnTe, etc.) or metal oxide (such as TiO2, SiO2, TeO2, ZnO etc.) or combinations thereof, to provide quantum dots with phosphine-free core-shell structures. This shelling improves thermal stability of the silver chalcogenide quantum dots and, for some applications, improves the photoluminescence quantum yield.

In a third aspect, the present invention relates to an optoelectronic device, comprising the quantum dot population of the first aspect of the invention, for any of its embodiments.

For some embodiments, the optoelectronic device of the third aspect of the present invention comprises the quantum dot population obtained with the method of the second aspect of the invention, for any of its embodiments.

For an embodiment of the optoelectronic device of the third aspect of the present invention, the quantum dot population is provided in the form of a sheet or layer previously formed or by spin-coating or printing the above described ink onto a substrate or lower sheet or layer.

According to an embodiment, the optoelectronic device of the third aspect of the present invention implements a photodetector device, while for other embodiments the optoelectronic device implements a light emitting device or an image sensor.

For an embodiment, the optoelectronic device comprises a light absorbing structure (such as a sheet, film or layer) comprising the above described quantum dot population and made to absorb, in the visible spectrum and/or at least one of infrared light, near infrared light, and short-wavelength infrared light.

### BRIEF DESCRIPTION OF THE FIGURES

In the following some preferred embodiments of the invention will be described with reference to the enclosed figures. They are provided only for illustration purposes without however limiting the scope of the invention. In accordance with common practice, the components in the figures are drawn to emphasize specific features and they are not drawn to the right scale.
Figure 1 is a plot showing the absorption spectrums of different size Ag₂Te quantum dots of the population of the first aspect of the present invention, and obtained according to the method of the second aspect, according to respective embodiments.
Figure 2 is a plot showing the x-ray diffraction pattern (XRD) of typical Ag₂Te quantum dots obtained with example experiment 2.
Figure 3 is a transmission electron microscope (TEM) image of typical Ag₂Te quantum dots obtained with example experiment 2.
Figure 4 is an inverse fast-Fourier-transform (FFT) high resolution TEM image of Ag₂Te quantum dots. Inset: high resolution TEM image of Ag₂Te quantum dots.
Figures 5 and 6 are plots showing the absorption spectrum of Ag₂Te quantum dots solution obtained with the method of the second aspect of the invention, for an embodiment for which a surface ligand-exchange has been performed on the quantum dots.

### DESCRIPTION OF THE PREFERRED EMBODIMENTS

In the present section, by means of several experiments detailed below, the present inventors demonstrate the feasibility and good results offered by the present invention, specifically for embodiments for which the silver chalcogenide quantum dots of the quantum dot population of the first aspect of the invention are Ag₂Te quantum dots.

Specifically, with respect to the method of the second aspect of the invention, it is here demonstrated that the present invention provides a facile, phosphine free synthesis method and post-synthesis stabilizing strategy for size controllable Ag₂Te quantum dots, that allows distinct excitonic absorption peak tunable from 1000nm to ~2000nm. The post-synthesis stabilizing strategy is achieved by adding excess Ag precursor to consume 1-dodecanethiol (DDT) in the reaction system and further obtain Ag₂Te quantum dots passivated predominately by oleyamine and small amount of DDT.

Here, the present inventors demonstrate for the first time size-controllable, monodispersed Ag₂Te quantum dots with distinct excitonic peak (peak-valley ratio > 1.2) from 1000nm to 2000nm based on phosphine free and post-synthesis stabilizing strategy.

In addition, the preparation of an ink with the obtained Ag₂Te quantum dots is also demonstrated experimentally below.

### Example 1:

### Ag₂Te quantum dots with excitonic peak at ~1000nm

### Synthesis by hot-injection method:

A mixture of 30mL Oleylamine (OLAm) and 15mL 1-octadecene (ODE) was loaded into a 100mL flask and degassed under vacuum at 100°C for 2 hours. In the meantime, 4.7 (20mmol) silver iodide (Agl) was dissolved into 20mL pre-dried OLAm under inert atmosphere at 50°C to prepare 1M Agl/OLAm precursor. 200mg tellurium oxide (TeO₂) was dissolved into 5mL 1-dodecanethiol (DDT) at 100°C with continuous Ar bubbling to prepare 0.25M Te-DDT precursor. The temperature of OLAm/ODE mixture was then lowered to 80°C and the flask is refilled with Ar. When the temperature is stable, 3 mL Agl/OIAm precursor was injected into OLAm/ODE mixture, followed by injecting 5mL Te-DDT precursor. The solution color darkens immediately after injection Te-DDT precursor and the solution temperature was kept at 80°C for ten more minutes before removing heating mantle and cooling down naturally. Stabilizing and purification:

10mL Agl/OLAm precursor was added dropwise after the reaction solution cool down to room temperature. The solution was left stirring for 30min. The solution was then centrifuged at 6krpm for 3min. The precipitate was discarded and the supernatant was kept. 15mL methanol was then added into the supernatant solution, followed by centrifugation at 6krpm for 3min. The precipitates was discarded and 60mL methanol was further added into the supernatant, followed by centrifugation at 6krpm for 3min. The precipitate was further dissolved into 30mL toluene with 5mL Agl/OLAm precursor. 15mL methanol was added and mixed, followed by 6krpm/3min centrifugation. Precipitate was discarded and 30mL methanol was further added into the supernatant. The mixture was centrifuged again at 6krpm for 3min. The supernatant was discarded and the solids was dissolved into anhydrous toluene in inert atmosphere for further use.

### Example 2:

### Ag₂Te quantum dots with excitonic peak at ~1500nm

### Synthesis by hot-injection method:

A mixture of 30mL Oleylamine (OLAm) and 15mL 1-octadecene (ODE) was loaded into a 100mL flask and degassed under vacuum at 100°C for 2 hours. In the meantime, 4.7 (20mmol) silver iodide (Agl) was dissolved into 20mL pre-dried OLAm under inert atmosphere at 50°C to prepare 1M Agl/OLAm precursor. 200mg tellurium oxide (TeO₂) was dissolved into 5mL 1-dodecanethiol (DDT) at 100°C with continuous Ar bubbling to prepare 0.25M Te-DDT precursor. The temperature of OLAm/ODE mixture was then lowered to 140°C and the flask is refilled with Ar. When the temperature is stable, 3 mL Agl/OIAm precursor was injected into OLAm/ODE mixture, followed by injecting 5mL Te-DDT precursor. The solution color darkens immediately after injection Te-DDT precursor and the solution temperature was kept at 140°C for ten more minutes before removing heating mantle and cooling down naturally. Stabilizing and purification:

3mL Agl/OLAm precursor was added dropwise after the reaction solution cool down to room temperature. The solution was left stirring for 30min. The solution was then centrifuged at 6krpm for 3min. The precipitate was discarded and the supernatant was kept. 16mL methanol was then added into the supernatant solution, followed by centrifugation at 6krpm for 3min. The precipitate was further dissolved into 30mL toluene with 3mLAgl/OLAm precursor. 16mL methanol was added and mixed, followed by 6krpm/3min centrifugation. Precipitate was discarded and 25mL methanol was further added into the supernatant. The mixture was centrifuged again at 6krpm for 3min. The supernatant was discarded and the solids was dissolved into anhydrous toluene in inert atmosphere for further use.

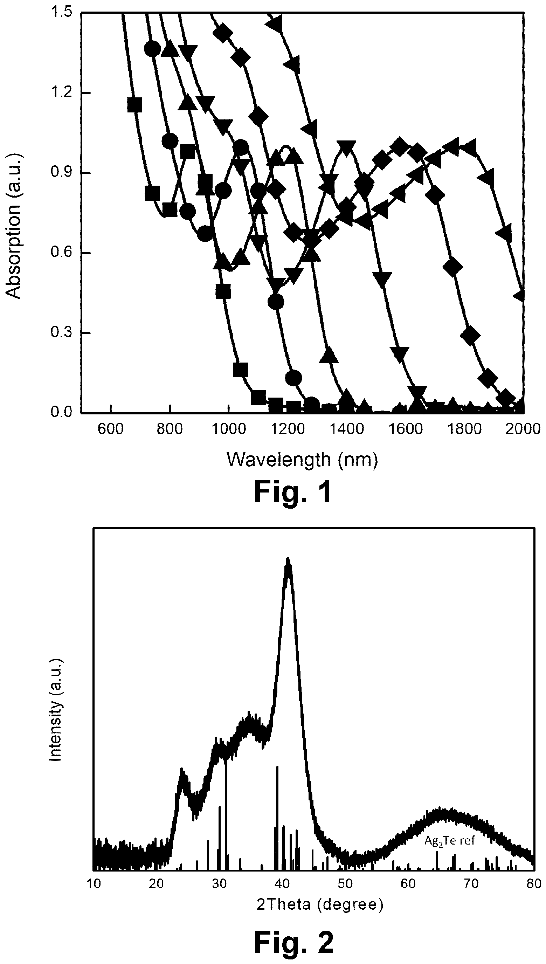

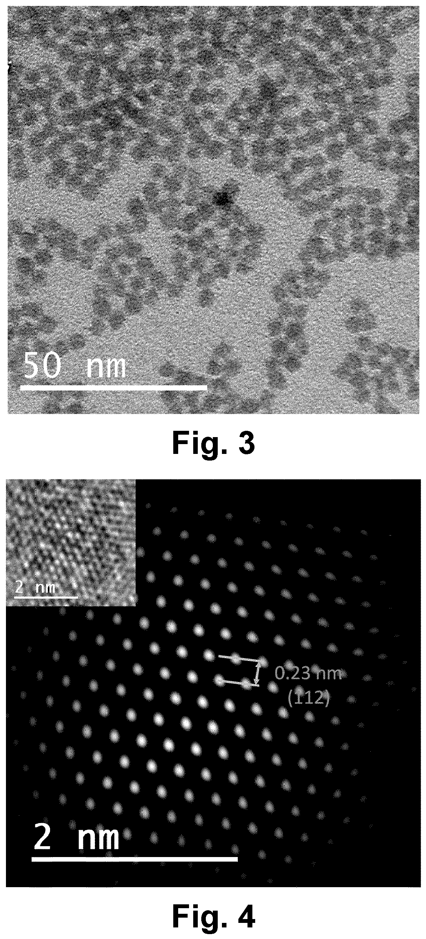

Fig. 1 shows the representative absorption spectra of resultant Ag₂Te quantum dots (QDs), indicating the size/spectral tunability of Ag₂Te QDs from 800nm to over 2000nm. Fig. 2 shows the x-ray diffraction pattern of a typical Ag2Te QD powders, consistent with the monoclinic Ag₂Te crystal structure. Fig 3 presents the typical transmission electron microscope image of Ag₂Te QDs with absorption peak of 1550 nm and a size of ~ 4 ± 0.5 nm, showing the narrow size distribution. Furthermore, high resolution TEM images shows ~0.23nm inter-plane distance, consistent with the monoclinic Ag₂Te crystal structure and XRD patterns.

Although similar size Ag₂Te QDs have been reported, the absorption spectrum showed only a shoulder with peak-valley ratio <1, while the QDs of the present invention show a distinct excitonic peak with peak-valley ratio ~ 1.5, presumably due to different surface ligands and chemistry. The results further demonstrate the potential of the present invention.

### Example for ink preparation:

Ag₂Te QD solution was prepared by dissolved Ag₂Te QDs in octane (first solvent) with a concentration of 10 mg/mL. The ligand solution was prepared with dissolved 3-mercaptopropionic acid (MPA) into N, N- dimethylformamide (DMF) (second solvent) with a concentration of 1%. 10mL QD/Octane solution was then mixed with 10mL ligand solution, followed by vigorous mixing until a clear phase separation was observed. The DMF phase was then extracted and the octane phase was discarded. The DMF phase, which contains QDs, was then mixed with 10mL neat octane (first solvent) and extracted again. This step was repeated two more times. Finally, the QDs/DMF phase was mixed with 10mL toluene (third solvent) to precipitate the QDs, followed by centrifugation at 6000rpm for 3min. The supernatant was discarded and the remaining QD pellet was further dissolved in neat DMF (fourth solvent) to prepare an ink that is ready for spin-coating or printing process.

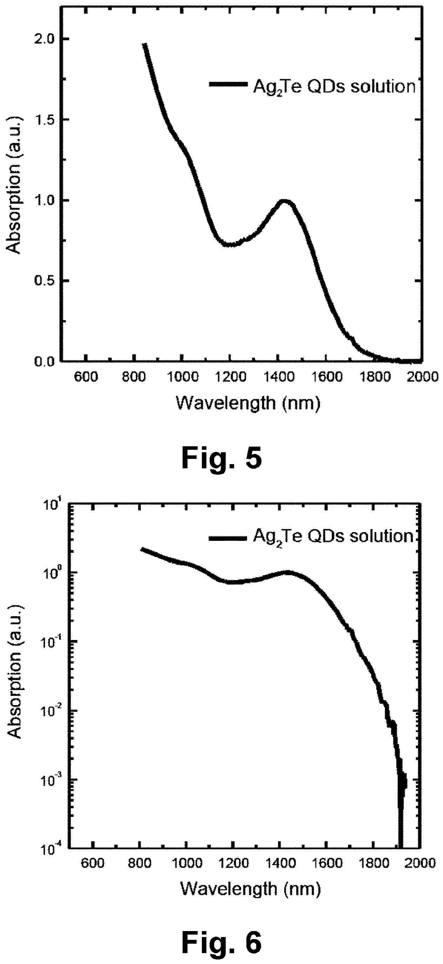

Finally, Figures 5 and 6 are plots showing the absorption spectrum for a typical solution of Ag₂Te quantum dots obtained with the method of the second aspect of the invention, for an embodiment described in the above section, for which a 3-mercaptopropionic acid (3-MPA) was used to ligand-exchange oleylamine/dodecanethiol on the surface of the silver chalcogenide quantum dots.

The resulting Ag₂Te quantum dots show first exciton peak at ~1400nm, and could be used to fabricate a light absorbing film.

As stated in a previous section, for some embodiments, the method of the second aspect of the present invention further comprises shelling the silver chalcogenide quantum dots with a shell made of a phosphine-free material.

Phosphines are excluded from all the precursors used to grow that shell, leading to a final phosphine-free core-shell quantum dots structure.

Some examples are provided below for growing those shells, according to different embodiments.

### Example A:

This is an example for growing ZnTe shell on Ag₂Te quantum dots. Other shells could follow a similar procedure. For growing ZnTe shell, a Zn-OLAm mixture was first prepared by dissolving zinc acetate in oleylamine under pumping. Ag₂Te quantum dots in 1-Octadecene was then injected into the Zn-OLAm mixture under argon atmosphere and desired temperature. TeO2-DDT, as tellurium precursor, was added dropwise using a syringe pump. After growing ZnTe shell, the quantum dots were purified with anti-solvents and re-dispersed into nonpolar solvents for further use.

### Example B:

For Zn treatment, for improving thermal stability, the procedure was done in-situ after Ag₂Te quantum dots growth without purification. Zn-OLAm mixture was prepared in advance by dissolving zinc acetate in oleylamine. Different amount of Zn-OLAm precursor was injected into the crude reaction solution dropwise with syringe pump. After Zn treatment, the quantum dots are precipitated with methanol and re-dispersed into toluene. Zn-OLAm precursor was added into aforementioned quantum dot solution again for further surface treatment. The quantum dots were further precipitated with methanol and re-dispersed into toluene for further use.

A person skilled in the art could introduce changes and modifications in the embodiments described without departing from the scope of the invention as it is defined in the attached claims.

## Claims

1. A quantum dot population comprising silver chalcogenide quantum dots, **characterized in that** the silver chalcogenide quantum dots do not include phosphine.

2. The quantum dot population of claim 1, wherein the silver chalcogenide quantum dots are synthesized silver chalcogenide quantum dots.

3. The quantum dot population of any of the previous claims, wherein the silver chalcogenide quantum dots are passivated by amines and thiols.

4. The quantum dot population of any of the previous claims, wherein the silver chalcogenide quantum dots have distinct excitonic absorption peak, having a peak-valley ratio > 1.2, tuned above 1400nm.

5. The quantum dot population of any of the previous claims, wherein the silver chalcogenide quantum dots are shelled with a shell made of a phosphine-free material.

6. A method for obtaining the quantum dot population of any of the previous claims, **characterized in that** the method comprises obtaining the silver chalcogenide quantum dots without using phosphine.

7. The method of claim 6, comprising:
- preparing silver precursor from amines and at least one of silver halide and silver pseudo-halide;
- preparing chalcogenide precursor from chalcogen oxide and thiols; and
- synthesizing the silver chalcogenide quantum dots by injecting both the silver precursor and the chalcogenide precursor into a solution.

8. The method of claim 7, comprising providing said solution by loading pre-dried hydrocarbon solvents under inert atmosphere heating at a temperature between 20°C and the boiling point of said pre-dried hydrocarbon solvents.

9. The method of claim 7 or 8, further comprising adding extra silver precursor as post-synthesis treatment to stabilize the silver chalcogenide quantum dots in solvents without ripening.

10. The method of claim 6, comprising:
- preparing silver precursor from amines and at least one of silver halide and silver pseudo-halide;
- preparing chalcogenide precursor from chalcogen oxide and thiols; and
- loading said silver and chalcogenide precursors in a hydrocarbon solvent followed by a heat-up process from room temperature to the boiling point of said hydrocarbon solvent.

11. The method of any of claims 7 to 10, wherein:
- said step of preparing silver precursor from silver halide comprises pre-drying amines under vacuum and dissolving silver halide in pre-dried amines with various concentrations at mild temperature, between 20°C and 100°C, in inert atmosphere; and/or
- said step of preparing chalcogenide precursor comprises mixing chalcogen oxide with thiols in inert atmosphere under mild temperature heating, between room temperature and 150°C, and continuous inert gas bubbling.

12. The method of any of claims 6 to 11, wherein said silver chalcogenide quantum dots are organic ligands capped silver chalcogenide quantum dots, and the method further comprises performing a ligand-exchange on surface of the silver chalcogenide quantum dots, for providing the same with ligands with a shorter chain than said organic ligands.

13. The method of any of claims 6 to 11, further comprising preparing an ink with the obtained silver chalcogenide quantum dots, by performing the following steps:
- preparing a silver chalcogenide quantum dot solution by dissolving organic ligands capped silver chalcogenide quantum dots into a first solvent;
- preparing a ligand solution by dissolving desired ligands into a second solvent, wherein said second solvent is not miscible with said first solvent, and wherein said desired ligands have a shorter chain than said organic ligands;
- doing phase transfer ligand exchange by mixing said silver chalcogenide quantum dot solution with said ligand solution, wherein two phases are obtained: a first phase containing said first solvent and exchanged organic ligands, and a second phase containing said second solvent with ligand-exchanged quantum dots;
- precipitating said ligand-exchanged quantum dots by adding a third solvent into the second phase; and
- and preparing quantum dot inks by dissolving said ligand-exchanged silver chalcogenide quantum dots into a fourth solvent.

14. The method of any of claims 6 to 13, further comprising shelling the silver chalcogenide quantum dots with a shell made of a phosphine-free material, to provide quantum dots with phosphine-free core-shell structures.

15. An optoelectronic device, comprising the quantum dot population of any of claims 1 to 5.
